Europäisches Patentamt

(19) European Patent Office

Office européen des brevets

(11) Publication number: **0 270 902**
**B1**

(12) **EUROPEAN PATENT SPECIFICATION**

<table>
<tr><td>(45) Date of publication of the patent specification:<br>**19.12.90**</td><td>(51) Int. Cl.⁵: **C08J 3/00**, C08L 21/00</td></tr>
</table>

(21) Application number: **87117278.9**

(22) Date of filing: **24.11.87**

(54) **Bag containing a powdery or particulate elastomer material.**

<table>
<tr><td>(30) Priority: **05.12.86 CH 4857/86**</td><td>(73) Proprietor: **THE DOW CHEMICAL COMPANY, 2030 Dow Center Abbott Road P.O. Box 1967, Midland Michigan 48640-1967(US)**</td></tr>
<tr><td>(43) Date of publication of application:<br>**15.06.88 Bulletin 88/24**</td><td></td></tr>
<tr><td></td><td>(72) Inventor: **Meier, Albert J., Nuburg 8, CH-8840 Einsiedeln(CH)**</td></tr>
<tr><td>(45) Publication of the grant of the patent:<br>**19.12.90 Bulletin 90/51**</td><td></td></tr>
<tr><td></td><td>(74) Representative: **Sternagel, Hans-Günther, Dr. et al, Patentanwälte Dr. Michael Hann Dr. H.-G. Sternagel Sander Aue 30, D-5060 Bergisch Gladbach 2(DE)**</td></tr>
<tr><td>(84) Designated Contracting States:<br>**BE DE FR GB IT NL SE**</td><td></td></tr>
<tr><td>(56) References cited:<br>**EP-A- 0 076 521**<br>**DE-A- 1 578 550**<br>**US-A- 4 248 348**</td><td></td></tr>
</table>

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

### Background of the Invention

The present invention relates to a bag containing powdery or particulate elastomer material. The present invention further relates to a process for preparing a polymer composition by compounding a polymer with a polymeric or non-polymeric additive at a temperature of from 100°C to 220°C wherein at least one component of the composition is in a powder or particulate form.

Processes for preparing a polymer composition by compounding a polymer with a polymeric or non-polymeric additive have been known for a long time. Polymer compositions which are typically used for preparing moulded, extruded or calendered goods, for example cables, sheets, hoses or films, usually contain one or more types of polymers and additives such as pigments, fillers, stabilisers, antioxidants or lubricants. In order to produce such goods of a high quality, it is necessary that the components of the composition are thoroughly mixed. This can be achieved by homogenously blending or compounding the composition after having heated it, for example to a temperature of from 100°C to 220°C. The components of the desired composition are typically delivered in containers such as drums or bags to the compounding equipment, the containers are opened and their content is introduced into the compounding equipment.

It has been known for a long time that unpacking powdery or particulate materials can cause problems, such as spilled material, sometimes even dust explosions or health risks when the dusty air is inhaled. Some materials are sticky so that they form lumps or are caked together. Although there is generally no danger of a dust explosion, unpacking these sticky materials is often inconvenient since the cake or lumps can break apart and the material can be spilled.

EP-A 0 076 521 and US-A 4 248 348 address to these problems.

EP-A 0 076 521 it has been suggested to package bales of vulcanised or unvulcanised rubber or compounding ingredients therefore in bags made from syndiotactic 1,2-polybutadiene. The bags are said to be compatible with a rubber compound and the bags can be introduced into a mixer together with their contents. The European patent application further discloses that bags made from syndiotactic 1,2-polybutadiene block together and that it is virtually impossible to open the bags for filling unless antiblock and slip agents are employed for manufacturing the bags. US-A 4 248 348 discloses a package which comprises unvulcanised rubber or compounding ingredients for unvulcanised rubber and a protective film made of an ethylene/vinyl acetate copolymer. The film material is said to be dispersible in the rubber, however, the film material must contain an antiblock agent.

Accordingly, it would be desirable to provide further types of bags which are suitable for packaging a powdery or particulate elastomer material in order to avoid the problems caused by unpacking this material.

The object of the present invention is attained by a bag containing a powdery or particulate elastomer material, characterized in that the elastomer material has a Mooney viscosity of up to 120, measured at a temperature between 100°C and 125°C, and at least 80 weight percent of the bag material is an olefin copolymer which comprises in copolymerised form a) from 85 to 98 weight percent of at least one olefin monomer and b) from 15 to 2 weight percent acrylic or methacrylic acid or an ionomer thereof.

Surprisingly, it has been found that the bag material is compatible with any powdery or particulate elastomer material having a Mooney viscosity of up to 120, measured at a temperature between 100°C and 125°C when such an elastomer material is compounded in the below described process of the present invention.

Another aspect of the present invention is a process for preparing a polymer composition by compounding a polymer with a polymeric or non-polymeric additive at a temperature of from 100°C to 220°C wherein at least one component of the composition is in a powder or particulate form which process is characterised in that at least a part of the components in powder or particulate form is packed in a bag of which at least 80 percent based on the weight of the bag material is an olefin copolymer which comprises in copolymerised form

a) from 85 to 98 weight percent of at least one olefin monomer and

b) from 15 to 2 weight percent acrylic or methacrylic acid or an ionomer thereof and the bag containing the powdery or particulate component is introduced into the compounding equipment.

It has been found that not only can problems of safety and spilling be avoided by introducing bags containing the powdery or particulate component directly into the compounding equipment without opening them, but also the bag itself is dispersible evenly in the polymer composition at a temperature of from 100°C to 220°C. Furthermore, the process of the present invention allows easy addition of the desired amounts of components by counting the number of bags which contain a defined amount of packed material. The material in the bag can easily be transported to the compounding equipment, for example on conveyer lines.

### Detailed description of the Invention

The main component that is at least 80 weight percent of the bag is an olefin copolymer which comprises in copolymerised form

a) from 85, preferably from 90, weight percent and up to 98, preferably to 95, weight percent of at least one olefin monomer and

b) from 2, preferably from 5, weight percent, and up to 15, preferably to 10, weight percent acrylic or methacrylic acid or an ionomer thereof.

Suitable olefin monomers are those having generally from 2 to 20 carbon atoms per molecule. Beneficially, the olefin monomers are 1-alkenes having from 2 to 18 and preferably from 2 to 8 carbon atoms per molecule. Desirably, the olefin monomer is ethylene, propylene, 1-butene for 1,3-butadiene. More desirably, the olefin monomer is ethylene or propylene. Ethylene is the most preferred olefin monomer. The olefin copolymer suitable for use in the present invention contains at least one of the above described olefin monomers. It is sometimes desirable for the olefin copolymer to contain more than one of the above described olefin monomers, however, the total amount of these olefin monomers does not exceed 98 percent, based on the total weight of the olefin copolymer. Exemplary of suitable combinations of more than one of the above described olefin monomers are ethylene and propylene; ethylene and 1-butene; and ethylene or propylene and a diene.

The olefin copolymer comprises acrylic or methacrylic acid or an ionomer thereof in the above mentioned amount. Preferred ionomers are the zinc, sodium or magnesium ionomers. Acrylic acid is the most preferred comonomer.

The density of the olefin copolymer is generally from 0.91, preferably from 0.92 $g/cm^2$ to 0.95, preferably to 0.94 $g/cm^3$, measured according to ASTM method D-1505. The melt index is preferably from 0.1, more preferably from 1 g/10 min., to 30, more preferably to 20 g/10 min., measured according to ASTM method D-1238.

The olefin copolymer can be prepared by methods well known in the art. Typically it is produced by a gas phase polymerisation process in a high pressure autoclave.

The main component of the bag is the olefin copolymer described above. This means that at least 80 weight percent, preferably at least 90 weight percent, more preferably at least 95 weight percent, most preferably at least 98 weight percent of the bag material is the olefin copolymer described above. The bag material can comprise additives such as plasticisers, antioxidants, heat stabilisers, light stabilisers, pigments, processing aids, lubricants, fillers, antiblocking agents or slip agents.

The bag can contain any elastomer material which is in powdery or in particulate form having a Mooney viscosity of up to 120, measured at a temperature between 100°C and 125°C. By powdery or particulate elastomer material it is meant a material with an average particle size of less than 10 mm, preferably less than 6 mm, more preferably less than 2 mm and most preferably less than 1 mm. The Mooney viscosity is measured on a Mooney viscosimeter. High viscosity elastomers are typically measured at a temperature of 120°C or 125°C. Low viscosity elastomers are usually measured at 100°C. One Mooney corresponds to 8.46 g•m±0.02 g•m. The elastomer material contained in the bag of the present invention preferably has a Mooney viscosity of up to 120, measured at a temperature of 120°C.

Any elastomer material having the above mentioned characteristics is useful, for example olefinic copolymers containing a copolymer of an olefin, preferably ethylene, and a minor amount, for example up to 25 weight percent, preferably from 5 to 20 weight percent, of a diene, cycloaliphatic olefin, for example 1, 5-cyclopentane or cyclooctadiene, a substituted olefin, for example an alkyl acrylate or an alkyl methacrylate, a conjugated diolefin like butadiene, an alkenyl aromatic monomer such as styrene or its derivatives, or a vinyl ester such as vinyl acetate.

Further useful elastomers are terpolymers disclosed in EP-A-010428. Preferred ethylene terpolymers are ethylene/1-butene/1-octene, ethylene/porpylene/1-octene, ethylene/propylene/butadiene or ethylene/propylene/octadiene. These terpolymers preferably have a Mooney viscosity of 30 to 90, measured at 125°C.

Preferred elastomer materials are olefin copolymers having polymerised therein at least one olefin monomer in an amount of from 70 to 97 percent, preferably from 73 to 90 percent, and vinyl acetate in an amount of from 30 to 3 percent, preferably from 27 to 10 percent, based on the total weight of the olefin copolymer. The preferred olefinic monomers are those described above. These olefin/vinyl acetate copolymers such as ethylene/vinyl acetate copolymers preferaby have a Mooney viscosity of 5 to 30, measured at 100°C.

The most preferred elastomer materials are thermoplastic halogenated polymers of non-aromatic ethylenically unsaturated hydrocarbons of 2 to 12 carbon atoms. Among these halogenated polymers the fluorinated and chlorinated polymers are particularly useful. The chlorinated polymers are preferred. Preferred chlorinated polymers are chloroprene rubbers (polychloroprene) made by polymerising 2-chloro-1,3-butadiene. Chloroprene rubbers preferably have a Mooney viscosity of 35 to 110, measured at 100°C.

Particularly preferred chlorinated polymers are e.g. described in US-A 4 376 799. The average chlorine content of the chlorinated polymers is preferably from 25, most preferably from 35, weight percent to 50, most preferably to 48, weight percent, based on the total weight of the chlorinated polymers.

Halogenated, preferably chlorinated, homo- or copolymers of said hydrocarbons are useful.

Appropriate halogenated homopolymers are e.g. halogenated polymerized $C_{2-4}$-olefins, preferably polyethylene, polypropylene or polybutene wherein the butene units preferably are unbranched. Chlorinated polyethylene is particularly preferred.

Useful halogenated copolymers preferably contain major amounts of the above-mentioned $C_{2-4}$-olefins, most preferably ethylene. The most preferred copolymers contain at least 80, preferably at least 90, weight percent of one of these $C_{2-4}$-olefins. Useful comonomers are non-aromatic ethylenically unsaturated hydrocarbons of 2 to 12, preferably of 2 to 8, carbon atoms, preferably propylene, 1-butene, 2-butene and 1-octene; cycloaliphatic olefins of 2 to 12 carbon atoms, e.g. 1,5-cyclopentene or cyclooctadiene; and conjugated diolefins of 2 to 12 carbon atoms like butadiene. The halogenated polymers can comprise one or more copolymerized comonomers. The most preferred examples of chlorinated ethylene copolymers are chlorinated ethyl-

3

ene/propylene, ethylene/1-butene, ethylene/2-butene and ethylene/1-octene copolymers.

These polymers generally have a Mooney viscosity of up to 120, preferably of 20 to 120, more preferably of 50 to 100 and most preferably of 70 to 90, measured at a temperature of 120°C.

The crystallinity of the chlorinated ethylene homo- or copolymers (measured according to differential scanning calorimeter) is generally less than 30 percent, most preferably less than 10 percent.

The effective melt viscosity of the chlorinated ethylene homo- or copolymer, measured at 190°C at a shear rate of 145 sec.$^{-1}$ is generally from 500, preferably from 1500 Pa·s, to 3000, preferably to 2500 Pa·s.

The chlorinated ethylene homo- or copolymers can be produced according to known processes by chlorination of the ethylene homo- or copolymers in solution, suspension or gas phase. For this purpose, we refer to the NL-A 7 311 780 and 7 701 599. The density of the ethylene homo- or copolymers to be chlorinated is preferably from 0.91 to 0.965 g/cm$^3$, most preferably from 0.935 to 0.965 g/cm$^3$.

The olefin copolymer which comprises in copolymerised form from 85 to 98 weight percent of at least one olefin monomer and from 15 to 2 weight percent acrylic or methacrylic acid or an ionomer thereof can be fabricated into films, optionally in the presence of one or more additives described above, according to well known processes of making of ethylene polymer films, for example cast films and blown films. For example, the bubble technique can be used for making films in tubular form. Bags can be produced from the films in a known way. The bags can for example have a size suitable for 3 to 50 kg. preferably 10 to 30 kg. of elastomer material. Bags of this size preferably have a thickness from 100 to 300 μm, more preferably from 150 to 250 μm. The bags can be filled with the powdery or particulate elastomer material and sealed thereafter according to many known methods.

The bags of the present invention containing a powdery or particulate elastomer material described above are particularly suitable for the process of the present invention. However, any component in powder or particulate form which is packed in a bag described above can be used in a polymer composition produced according to the process of the present invention. The bags may for example contain a powdery or particulate pigment such as a phthalocyanine, filler such as carbon black or titanium dioxide, stabiliser such as magnesium hydroxide, lubricant such as a polyethylene wax, antioxidant such as a hindered phenolic derivative or diphenyl amine derivative. The compounding process of the present invention is carried out at at temperature of from 100°C to 220°C. The preferred compounding temperature is mainly determined by the components of the polymer composition. In general, a compounding temperature of 100°C to 180°C is preferred. When the bags contain halogenated polyolefins, a compounding temperature of 100°C to 160°C, more preferably of 100°C to 130°C is appropriate. Even at the compounding temperature as low as 100°C to 130°C the bag is evenly dispersed and does not ad- versly affect the properties of the halogenated polyolefins. No agglomerates of the bag material or residual film strips remain in the polymer composition after the compounding at the above mentioned temperature has taken place. For carrying out the compounding process of the present invention all components can be fed into the compounding equipment in a known way. For example, conveyor belts can be used for transporting the bags containing the powdery or particulate material into the compounding equipment. Conventional batch processing equipment such as internal mixers, for example Banbury mixers, or trough kneaders are useful. The satisfactory mixing time depends on various factors such as the melt index of the components, the mixing shear rate, the mixing temperature as well as the mixing efficiency of the compounding equipment. In general, less than 10 minutes, in most cases less than 5 minutes, are required in order to disperse the bag material satisfactorily in the polymer composition.

It is not necessary that all components are packed in bags of the material described above and transported in the bags into the compounding equipment. Some components can be passed as solid blocks or in liquid form into the compounding equipment without being packed into bags of the above described material. Such components can be made of any material commonly used in polymer compositions such as natural rubbers, plasticisers or liquid lubricants.

The following example illustrates the present invention but it is not to be construed to limit its scope.

Example

A film of a thickness of about 180 μm is produced on a cast film line. The material for producing the film is an ethylen/acrylic acid copolymer which contains 91 percent ethylene and 9 percent acrylic acid, based on the weight of the copolymer. This copolymer has a melt index (ASTM test D-1238) of 1.5 g/10 min. and a density of 0.938 g/cm$^3$. A slip agent is added to the ethylene/acrylic acid copolymer in an amount of 5 weight percent before producing a film therefrom. The produced film is cut, folded and glued to produce a bag. The bag is filled with a chlorinated polyethylene having a chlorine content of 36 weight percent, no residual crystallinity and a bulk density of 0.5 g/cm$^3$. The bag is then sealed and introduced an internal mixer together with 5 weight parts magnesium hydroxide, 70 weight parts calcium carbonate, 10 weight parts precipitated silica filler, 25 weight parts di-iso-nonyl-phthalate plasticiser, 0.8 weight parts 1, 4-dihydropyridine curative and 2.5 weight parts dimercaptothiadiazole derivative, based on 100 weight parts chlorinated polyethylene. The components are compounded at temperature of about 120°C during about 1.5 minutes. No residual film strips or agglomerates of ethylene/acrylic acid material is detectable after 1.5 minutes.

## Claims

1. Bag containing a powdery or particulate elastomer material, characterised in that the elastomer material has a Mooney viscosity of up to 120, measured at a temperature between 100°C and 125°C, and at least 80 weight percent of the bag material is an olefin copolymer which comprises in copolymerised form

a) from 85 to 98 weight percent of at least one olefin monomer and

b) from 15 to 2 weight percent acrylic or methacrylic acid or an ionomer thereof.

2. The bag of claim 1, characterised in that at least 80 weight percent of the bag material is an olefin copolymer which comprises in copolymerised form

a) from 90 to 95 weight percent of at least one olefin monomer and

b) from 10 to 5 weight percent acrylic or methacrylic acid or a zinc, sodium or magnesium ionomer thereof.

3. The bag of claim 1 or 2, characterised in that at least 80 weight percent of the bag material is an ethylene/acrylic acid copolymer.

4. The bag of any of claims 1 to 3, characterised in that it contains a powdery or particulate halogenated polyolefin, an ethylene/vinyl acetate copolymer, an ethylene/propylene/octadiene copolymer or an ethylene/propylene/butadiene copolymer.

5. The bag of any of claims 1 to 4, characterised in that it contains a powdery or particulate halogenated polyolefin having a Mooney viscosity of 50 to 100 at a temperature of 120°C.

6. The bag of claim 5, characterised in that it contains a chlorinated polyethylene having a chlorine content of from 25 to 50 weight percent, based on the total weight of the chlorinated polyethylene.

7. A process for preparing a polymer composition by compounding a polymer with a polymeric or non-polymeric additive at a temperature of from 100°C to 220°C wherein at least one component of the composition is in a powder or particulate form, characterised in that at least a part of the components in powder or particulate form is packed in a bag whereof at least 80 percent, based on the weight of the bag material is an olefin copolymer which comprises in copolymerised form

a) from 85 to 98 weight percent of at least one olefin monomer and

b) from 15 to 2 weight percent acrylic or methacrylic acid or an ionomer thereof

and the bag containing the powdery or particulate component is introduced into the compounding equipment.

8. The process of claim 7, characterised in that a bag of any of claims 1 to 6 is introduced into the compounding equipment.

9. The process of claim 7 or 8, characterised in that the compounding is carried out at a temperature of from 100°C to 160°C.

10. The process of claim 9, characterised in that the compounding is carried out at a temperature of from 100°C 0 130°C.

## Patentansprüche

1. Beutel enthaltend pulverförmiges oder teilchenförmiges Elastomermaterial, dadurch gekennzeichnet, daß das Elastomermaterial eine Mooney Viskosität von bis zu 120 aufweist, gemessen bei einer Temperatur zwischen 100°C und 125°C, und mindestens 80 Gew.-% des Beutelmaterials ein Olefincopolymer ist, das in copolymerisierter Form enthält

a) 85 bis 98 Gew.-% mindestens eines Olefinmonomeren und

b) 15 bis 2 Gew.-% Acrylsäure oder Methacrylsäure oder ein Ionomer derselben.

2. Beutel nach Anspruch 1, dadurch gekennzeichnet, daß mindestens 80 Gew.-% des Beutelmaterials ein Olefincopolymer ist, das in copolymerisierter Form enthält

a) 90 bis 95 Gew.-% mindestens eines Olefinmonomeren und

b) 10 bis 5 Gew.-% Acrylsäure oder Methacrylsäure oder ein Zink-, Natrium- oder Magnesiumionomer derselben.

3. Beutel nach Anspruch 1 oder 2, dadurch gekennzeichnet, daß mindestens 80 Gew.-% des Beutelmaterials ein Ethylen/Acrylsäurecopolymer ist.

4. Beutel nach jedem der Ansprüche 1 bis 3, dadurch gekennzeichnet, daß er enthält ein pulverförmiges oder teilchenförmiges halogeniertes Polyolefin, ein Ethylen/Vinylacetatcopolymer, ein Ethylen/Propylen/Octadiencopolymer oder ein Ethylen/Propylen/Butadiencopolymer.

5. Beutel nach jedem der Ansprüche 1 bis 4, dadurch gekennzeichnet, daß er in pulverförmiger oder teilchenförmiger Form ein halogeniertes Polyolefin enthält, das eine Mooney Viskosität von 50 bis 100 bei einer Temperatur von 120°C aufweist.

6. Beutel nach Anspruch 5, dadurch gekennzeichnet, daß er ein chloriertes Polyethylen enthält mit einem Chlorgehalt von 25 bis 50 Gew.-%, bezogen auf Gesamtgewicht des chlorierten Polyethylens.

7. Verfahren zum Herstellen einer Polymerzusammensetzung durch Zusammenmischen eines Polymeren mit einem polymeren oder nicht polymeren Zusatz bei einer Temperatur von 100°C bis 220°C, wobei mindestens einer der Bestandteile der Zusammensetzung pulverförmig oder teilchenförmig ist, dadurch gekennzeichnet, daß mindestens ein Teil des pulverförmigen oder teilchenförmigen Materials in einen Beutel gefüllt wird, der aus mindestens 80%, bezogen auf Gewicht des Beutelmaterials, eines Olefincopolymeren besteht, das in copolymerisierter Form enthält

a) 85 bis 98 Gew.-% mindestens eines Olefinmonomeren und

b) 15 bis 2 Gew.-% Acrylsäure oder Methacrylsäure oder eines Ionomeren derselben, und der das pulverförmige oder teilchenförmige Material enthaltende Beutel in die Mischeinrichtung eingebracht wird.

8. Verfahren nach Anspruch 7, dadurch gekennzeichnet, daß ein Beutel nach Ansprüchen 1 bis 6 in die Mischeinrichtung eingebracht wird.

9. Verfahren nach Anspruch 7 oder 8, dadurch gekennzeichnet, daß das Zusammenmischen bei einer Temperatur von 100°C bis 160°C ausgeführt wird.

10. Verfahren nach Anspruch 9, dadurch gekennzeichnet, daß das Zusammenmischen bei einer Temperatur von 100°C bis 130°C ausgeführt wird.

**Revendications**

1. Sac contenant un matériau élastomère pulvérulent ou particulaire, caractérisé par le fait que le matériau élastomère présente une viscosité Mooney valant jusqu'à 120, mesurée à une température comprise entre 100°C et 125°C, et par le fait qu'au moins 80 pour-cent en poids du matériau du sac est un copolymère d'oléfine qui comprend, sous forme copolymérisée,

a) de 85 à 98 pour-cent en poids d'au moins un monomère d'oléfine et

b) de 15 à 2 pour-cent en poids d'acide acrylique ou méthacrylique ou d'un ionomère de ces acides.

2. Sac selon la revendication 1, caractérisé par le fait qu'au moins 80 pour-cent en poids du matériau du sac est un copolymère d'oléfine qui comprend, sous forme copolymérisée,

a) de 90 à 95 pour-cent en poids d'au moins un monomère d'oléfine et

b) de 10 à 5 pour-cent en poids d'acide acrylique ou méthacrylique ou d'un ionomère de zinc, de sodium ou de magnésium de ces acides.

3. Sac selon la revendication 1 ou 2, caractérisé par le fait qu'au moins 80 pour-cent en poids du matériau du sac est un copolymère éthylène/acide acrylique.

4. Sac selon l'une quelconque des revendications 1 à 3, caractérisé par le fait qu'il contient, sous forme pulvérulente ou particulaire, une polyoléfine halogénée, un copolymère éthylène/acétate de vinyle, un copolymère éthylène/propylène/octadiène ou un copolymère éthylène/propylène/butadiène.

5. Sac selon l'une quelconque des revendications 1 à 4, caractérisé par le fait qu'il contient une polyoléfine halogénée pulvérulente ou particulaire ayant une viscosité Mooney comprise entre 50 à 100 à une température de 120°C.

6. Sac selon la revendication 5, caractérisé par le fait qu'il contient un polyéthylène chloré d'une teneur en chlore comprise entre 25 et 50 pour-cent en poids, sur la base du poids total de polyéthylène chloré.

7. Procédé de préparation d'une composition polymère par mise en composition d'un polymère avec un additif polymère ou non polymère à une température comprise entre 100°C et 220°C, procédé dans lequel au moins l'un des composants de la composition est sous forme pulvérulente ou particulaire, caractérisé par le fait qu'au moins une partie des composants sous forme pulvérulente ou particulaire sont emballés dans un sac dont au moins 80 pour-cent, sur la base du poids du matériau du sac, est un copolymère d'oléfine qui comprend, sous forme copolymérisée

a) de 85 à 90 pour-cent en poids d'au moins un monomère d'oléfine et

b) de 15 à 2 pour-cent en poids d'acide acrylique ou méthacrylique ou d'un ionomère de ces acides

et par le fait que l'on introduit dans l'équipement de mélange le sac contenant le composant pulvérulent ou particulaire.

8. Procédé selon la revendication 7, caractérisé par le fait que l'on introduit dans l'équipement de mélange un sac de l'une quelconque des revendications 1 à 6.

9. Procédé selon la revendication 7 ou 8, caractérisé par le fait que le mélange s'effectue à une température comprise entre 100°C et 160°C.

10. Procédé selon la revendication 9, caractérisé par le fait que le mélange s'effectue à une température comprise entre 100°C et 130°C.